(19) Europäisches Patentamt
European Patent Office
Office européen des brevets

(11) EP 4 772 579 A1

(12) EUROPEAN PATENT APPLICATION
published in accordance with Art. 153(4) EPC

(43) Date of publication:
08.07.2026 Bulletin 2026/28

(21) Application number: 24859112.5

(22) Date of filing: 20.06.2024

(51) International Patent Classification (IPC):
C08L 69/00 (2006.01) C08G 81/00 (2006.01)
C08K 5/101 (2006.01) C08K 5/524 (2006.01)
C08L 73/00 (2006.01)

(52) Cooperative Patent Classification (CPC):
C08G 81/00; C08K 5/06; C08K 5/10; C08K 5/101; C08K 5/524; C08L 63/00; C08L 67/04; C08L 69/00; C08L 73/00

(86) International application number:
PCT/JP2024/022350

(87) International publication number:
WO 2025/047066 (06.03.2025 Gazette 2025/10)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 30.08.2023 JP 2023140032

(71) Applicant: Mitsubishi Engineering-Plastics Corporation
Tokyo 105-0021 (JP)

(72) Inventor: AKATSUKA, Wataru
Hiratsuka-shi, Kanagawa 254-0016 (JP)

(74) Representative: Müller-Boré & Partner Patentanwälte PartG mbB
Friedenheimer Brücke 21
80639 München (DE)

# (54) POLYCARBONATE RESIN COMPOSITION

(57) A polycarbonate resin composition, comprising a polycarbonate resin (A) and, relative to 100 parts by mass of the polycarbonate resin (A), 0.01 to 4 parts by mass of a polylactone-polyether copolymer (B) .

[FIG.1]

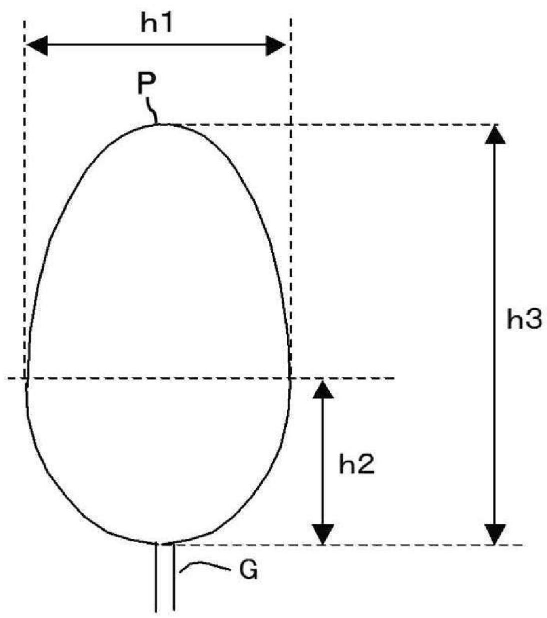


EP 4 772 579 A1

## Description

[Technical Field]

The present invention relates to a polycarbonate resin composition and, more specifically, to a polycarbonate resin composition that has good hue and excellent transparency and causes extremely less gas production and mold contamination during molding, and a molded article of this polycarbonate resin composition.

[Background Art]

Liquid crystal displays for use in PCs, mobile phones and the like are integrated with a planar light source device to meet the demands for low-profile, light-weight, labor-saving, and high-definition displays. The planar light source device includes a light guide plate that has a flat plate shape or a wedge-shaped cross-section with a uniformly inclined surface, so that incident light can be evenly and effectively guided to the liquid crystal display side. In addition, the light guide plate may have a raised and recessed pattern on its surface so as to be imparted with a light scattering function.

The light guide plate is obtained by injection molding of thermoplastic resin, with the raised and recessed pattern formed by transferring raised and recessed portions formed on a surface of a nested mold. The light guide plate has been produced by molding a resin material such as polymethyl methacrylate (PMMA). However, in response to the recent demand for display devices capable of displaying clearer images, a polycarbonate resin material with higher heat resistance is now being used, because the internal temperature of the devices tends to increase due to heat generation in the vicinity of a light source.

Polycarbonate resin is excellent in mechanical properties, thermal properties, electrical properties, and weather resistance, but is inferior in light transmittance to PMMA and the like. Thus, the use of a light guide plate made of polycarbonate resin along with a light source will result in a low-intensity planar light source body. Further, polycarbonate resin is more prone to yellowing than PMMA, which is disadvantageous in terms of the recent demand that the light guide plate should have a smaller chromaticity difference between a light entrance part and a location away from the light entrance part.

In order to improve the transmittance and hue of polycarbonate resin, PTL 1 proposes adding polyalkylene glycol composed of a linear alkyl group to the polycarbonate resin. The addition of polytetramethylene ether glycol leads to improved transmittance and yellowness index (YI).

Optical parts, such as the light guide plate, for use in mobile terminals, such as smartphones and tablet terminals, are becoming thinner and larger at an extremely rapid pace especially these days, and this trend makes it necessary for the light guide plate to be injection molded at high speed and high barrel temperature. However, such molding process easily leads to increased gas production and progression of mold contamination during molding. In view of this, the resin composition for use in this molding process is required not only to have excellent hue (YI) and transparency but also to cause less gas production and mold contamination during injection molding at high temperature and to have excellent impact resistance.

Further, amidst the remarkable progression of monitors, which are becoming larger, thinner, and more sophisticated, further improvement in transparency, hue, and mold contamination resistance is being required especially in edge-lit light guide plates.

[Citation List]

[Patent Literature]

[PTL 1] JP 5699188 B2

[Summary of Invention]

[Technical Problem]

In view of the above-described circumstances, an object of the present invention is to provide a polycarbonate resin composition that has good hue and excellent transparency, causes extremely less gas production and mold contamination during molding, and has excellent impact resistance.

[Solution to Problem]

As a result of intensive studies for achieving the above-described object, the present inventors have found that

adding a predetermined amount of polylactone-polyether copolymer to a polycarbonate resin results in a polycarbonate resin composition that has good hue and excellent transparency, causes extremely less gas production and mold contamination during molding, and has excellent impact resistance, thereby completing the present invention.

The present invention relates to a polycarbonate resin composition and a molded article as described below.

1. A polycarbonate resin composition, comprising a polycarbonate resin (A) and, relative to 100 parts by mass of the polycarbonate resin (A), 0.01 to 4 parts by mass of a polylactone-polyether copolymer (B).
2. The polycarbonate resin composition of 1 above, wherein the polylactone-polyether copolymer (B) comprises a polylactone unit and a polyether unit at a molar ratio of 5:95 to 95:5.
3. The polycarbonate resin composition of 1 or 2 above, wherein the polylactone-polyether copolymer (B) is a polycaprolactone-polyether copolymer.

4. The polycarbonate resin composition of any one of 1 to 3 above, wherein the polycaprolactone-polyether copolymer (B) is a polycaprolactone-polyether copolymer represented by general formula (I) or (II) below:

[C1]

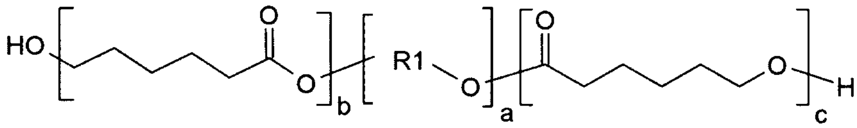

(I)

[C2]

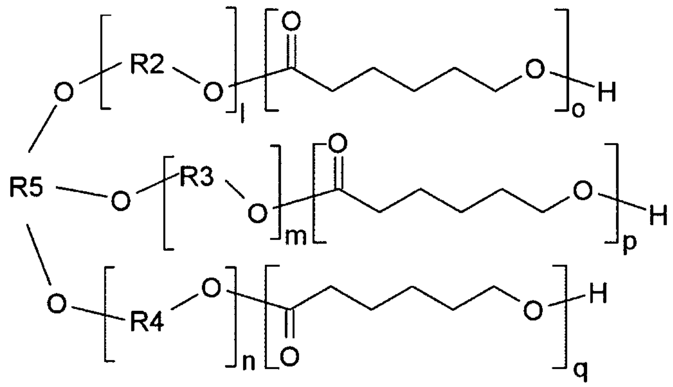

(II)

wherein R1 to R4 are each a linear or branched $C_{2-20}$ hydrocarbon group that may be substituted by an aryloxy or alkoxy group; R5 is $CH_2CHCH_2$, $CH_3C(CH_2)_3$ or $CH_3CH_2C(CH_2)_3$; a is an integer of 3 or more; b and c are each an integer of 1 or more; l, m and n are each an integer of 1 or more; and o, p and q are each an integer of 1 or more.

5. The polycarbonate resin composition of 4 above, wherein R1 to R4 in the general formula (I) or (II) are alkylene groups selected from the group consisting of 1,2-ethylene group, 1,2-propylene group, trimethylene group, 1,2-butylene group, and tetramethylene group.
6. The polycarbonate resin composition of any one of 1 to 5 above, wherein the polylactone-polyether copolymer (B) has a number-average molecular weight (Mn) of 200 to 10,000.
7. The polycarbonate resin composition of any one of 1 to 6 above, wherein the polycarbonate resin (A) has a viscosity-average molecular weight (Mv) of 10,000 to 50,000.
8. The polycarbonate resin composition of any one of 1 to 7 above, further comprising 0.005 to 0.5 parts by mass of a phosphorus stabilizer (C) relative to 100 parts by mass of the polycarbonate resin (A).
9. The polycarbonate resin composition of 8 above, wherein the phosphorus stabilizer (C) comprises a phosphorus compound having a phosphite structure.
10. The polycarbonate resin composition of claim 9, wherein the phosphorus stabilizer (C) comprises two or more phosphorus compounds having the phosphite structure, at least one of which is a phosphite stabilizer having a spiro ring skeleton.

11. The polycarbonate resin composition of any one of 1 to 10 above, further comprising 0.0005 to 0.2 parts by mass of an epoxy compound and/or an oxetane compound (D) relative to 100 parts by mass of the polycarbonate resin (A).
12. The polycarbonate resin composition of any one of 1 to 11 above, further comprising 0.01 to 0.5 parts by mass of a fatty acid ester (E) relative to 100 parts by mass of the polycarbonate resin (A) .
13. A pellet, comprising the polycarbonate resin composition of any one of 1 to 12 above.
14. A molded article, which is obtained by molding the pellet of 13 above.
15. The molded article of 14 above, which is an optical part.

[Advantageous Effects of Invention]

The polycarbonate resin composition of the present invention has good hue and excellent transparency, causes extremely less gas production and mold contamination during molding, and has excellent impact resistance. The molded article made of the polycarbonate resin composition of the present invention has excellent hue with a low YI value and good transparency and, thus, is particularly suitable for use as an optical part.

[Brief Description of Drawings]

[Figure 1]
Figure 1 is a plan view of a tear drop-shaped mold used for the evaluation of mold contamination in Examples.

[Description of Embodiments]

Hereinafter, the present invention will be described in detail by way of embodiments, examples and the like. Unless otherwise noted, the word "to" as used herein to indicate numerical ranges denotes that the numbers before and after this word represent the lower and upper limits of the ranges.
A polycarbonate resin composition of the present invention comprises a polycarbonate resin (A) and, relative to 100 parts by mass of the polycarbonate resin (A), 0.01 to 4 parts by mass of a polylactone-polyether copolymer (B).
The following is a detailed description of components of the polycarbonate resin composition, a molded article, etc. according to the present invention.

Polylactone-polyether copolymer (B)

The polycarbonate resin composition of the present invention includes a polylactone-polyether copolymer (B).
The polylactone-polyether copolymer (B) is a copolymer containing units derived from a lactone compound and ether units or ether units derived from polyglycol. This copolymer may be either a random copolymer or a block copolymer, and is preferably a bock copolymer composed of a polylactone block and a polyether block such that the polylactone is attached to the end of the polyether.
The molar ratio between the polylactone units and the polyether units in the polylactone-polyether copolymer (B) is preferably 5:95 to 95:5, more preferably 10:90 to 92:10. It is more preferred that the molar ratio of the polyether units is more than 50, because the polylactone-polyether copolymer (B) rich in polyether units contributes to excellent hue. Among others, the molar ratio between the polylactone units and the polyether units is preferably 10:90 to 45:55, 10:90 to 40:60, or 10:90 to 35:65, and particularly 10:90 to 30:70.
The molar ratio of the respective units in the polylactone-polyether copolymer (B) is measured with a 1H-NMR spectrometer by using 1,1,2,2-tetrachloroethylene-d2 as a solvent.
Examples of the lactone compound include cyclic lactone compounds such as ε-caprolactone, γ-butyrolactone, δ-valerolactone, β-propiolactone, and pivalolactone. These compounds can be used alone or in combination. The lactone compound is particularly preferably ε-caprolactone.
The ether unit may be represented by $-[R^1-O]-$, wherein $R^1$ is a linear or branched $C_{2-20}$ hydrocarbon group that may be substituted by an aryloxy or alkoxy group. $R^1$ may be substituted by an aryloxy or alkoxy group, and may be an aromatic ring-containing group, such as a 1-phenoxymethyl group.
$R^1$ is preferably a $C_{2-6}$ hydrocarbon group, in particular alkylene group. Examples of a liner $C_{2-6}$ hydrocarbon group include 1,2-ethylene group, trimethylene group, tetramethylene group, pentamethylene group, and hexamethylene group.
Examples of a branched $C_{2-6}$ hydrocarbon group include 1,2-propylene group, 1,2-butylene group, 2-methyl(1,2-propylene group), 2,2-dimethyl(1,2-propylene group), 1,2-dimethyl(1,2-propylene group), 1-methyl(1,2-propylene group), 1,2,2-trimethyl(1,2-propylene group), 2-methyl(1,2-butylene group), 1-methyl(1,2-butylene group), 1-isopropylene(1,2-ethylene group), 2-methyl,1-isopropylene(1,2-ethylene group), 1-tert-butyl(1,2-ethylene group), 2-ethyl(1,2-butylene group), 1-ethyl(1,2-butylene group), 1,1-dimethyltrimethylene group, 2-methyltetramethylene group, and 1-methylpentylene group.

Among them, $R^1$ is preferably 1,2-ethylene group, 1,2-propylene group, trimethylene group, 1,2-butylene group, or tetramethylene group, and particularly preferably 1,2-propylene group, trimethylene group, or tetramethylene group.

$R^1$s may be the same or different hydrocarbon group(s).

The production method for the polylactone-polyether copolymer (B) is not particularly limited, and known methods can be used. For example, it is desirable to use a method in which the lactone compound is ring-opening polymerized, followed by esterification and copolymerization (block copolymerization) with polyether glycol containing the ether units or alkylene oxide.

A diol compound, a triol compound or the like may be used for the copolymerization.

Examples of the diol compound include ethylene glycol, diethylene glycol, 1,2-propylene glycol, 1,3-propylene glycol, dipropylene glycol, 1,2-butanediol, 1,3-butanediol, 1,4-butanediol, 1,5-pentanediol, 2-methyl-1,3-propanediol, 2-methyl-1,4-butanediol, 1,6-hexanediol, 3-methyl-1,5-pentanediol, 1,9-nonanediol, 1,10-decanediol, neopentyl glycol, 2-ethyl-2-n-butyl-1,3-propanediol, 2-ethyl-2-hexyl-1,3-propanediol, and cyclohexanedimethanol.

Examples of the triol compound include glycerol, trimethylolethane, trimethylolpropane, butanetriol, pentanetriol, hexanetriol, heptanetriol, and octanetriol. Among them, glycerol and trimethylolpropane are preferred.

In a case where the triol compound is used, the resultant polylactone-polyether copolymer (B) will be a tri-branched polymer.

The polylactone-polyether copolymer (B) is preferably represented by general formula (I) or (II) below.

[C3]

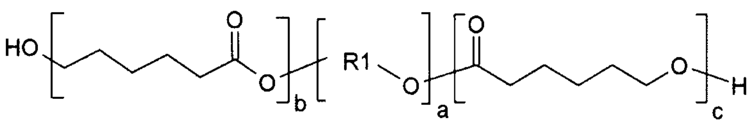

(I)

[C4]

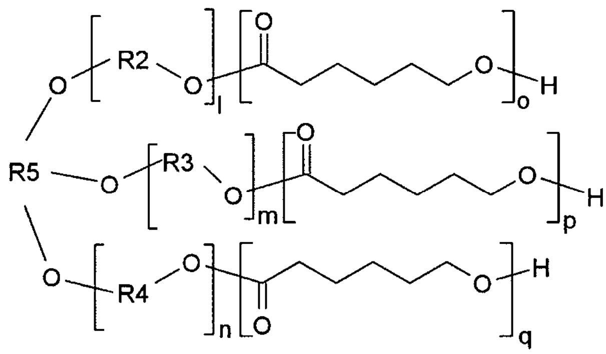

(II)

In formula (I) or (II), R1 to R4 are each a linear or branched $C_{2-20}$ hydrocarbon group that may be substituted by an aryloxy or alkoxy group, and R5 is $CH_2CHCH_2$, $CH_3C(CH_2)_3$ or $CH_3CH_2C(CH_2)_3$. In the formula, a is an integer of 3 or more; b and c are each an integer of 1 or more; l, m and n are each an integer of 1 or more; and o, p and q are each an integer of 1 or more.

In general formula (I) or (II), l, m and n are each an integer of 1 or more, preferably 1 to 100, more preferably 3 or more, still more preferably 5 or more, particularly preferably 10 or more, and more preferably 90 or less, still more preferably 80 or less, in particular 70 or less, 60 or less, 50 or less, 45 or less, or 40 or less, and especially preferably 35 or less.

Further, o, p and q are each an integer of 1 or more, preferably 1 to 100, more preferably 3 or more, still more preferably 5 or more, particularly preferably 10 or more, and more preferably 90 or less, still more preferably 80 or less, in particular 70 or less, 60 or less, 50 or less, 45 or less, or 40 or less, and especially preferably 35 or less.

Further, a is an integer of 3 or more, preferably 3 to 100, more preferably 3 or more, still more preferably 5 or more, particularly preferably 10 or more, and more preferably 90 or less, still more preferably 80 or less, in particular 70 or less, 60 or less, 50 or less, 45 or less, or 40 or less, and especially preferably 35 or less. Further, b and c are each an integer of 1 or more, preferably 1 to 100, more preferably 3 or more, still more preferably 5 or more, particularly preferably 10 or more, and more preferably 90 or less, still more preferably 80 or less, in particular 70 or less, 60 or less, 50 or less, 45 or less, or 40 or less, and especially preferably 35 or less.

R1 to R4 are each a linear or branched $C_{2-20}$ hydrocarbon group, which may be substituted by an aryloxy or alkoxy group. Examples thereof include an aromatic ring-containing group, such as a 1-phenoxymethyl group. Preferably, R1 to R4 are the same as $R^1$ of the ether unit represented by $R^1$-O] above. R1 to R3 are preferably alkylene groups selected from 1,2-ethylene group, 1,2-propylene group, trimethylene group, 1,2-butylene group, and tetramethylene group.

R5 is $CH_2CHCH_2$, $CH_3C(CH_2)_3$ or $CH_3CH_2C(CH_2)_3$, and particularly preferably $CH_2CHCH_2$. In a case where l, m and n are 2 or more, R1 to R3 may be the same or different hydrocarbon group(s).

The number-average molecular weight (Mn) of the polylactone-polyether copolymer (B) is preferably 200 to 10,000, more preferably 300 or more, still more preferably 500 or more, and more preferably 5,000 or less, still more preferably 4,500 or less. The number-average molecular weight within this range contributes to excellent compatibility with the polycarbonate resin (A) and is less likely to lead to gas production during molding. If the number-average molecular weight exceeds the upper limit, the compatibility tends to decrease. If the number-average molecular weight exceeds the lower limit, gas production is likely to occur during molding.

The number-average molecular weight (Mn) of the polylactone-polyether copolymer (B) is calculated on the hydroxyl value measured in accordance with JIS K1577.

The polylactone-polyether copolymer (B) is contained in an amount of 0.01 to 4 parts by mass relative to 100 parts by mass of the polycarbonate resin (A). The polycarbonate resin composition containing the polylactone-polyether copolymer (B) in an amount within this range has good hue and excellent transparency, causes extremely less gas production and mold contamination during molding, and has excellent impact resistance without suffering from a reduction in impact resistance. The content of the polylactone-polyether copolymer (B) is preferably 0.05 parts by mass or more, more preferably 0.1 parts by mass or more, still more preferably 0.3 parts by mass or more, and preferably 3 parts by mass or less, more preferably 2 parts by mass or less, and still more preferably 1 part by mass or less. If the content of the polylactone-polyether copolymer (B) exceeds the lower or upper limit, the resultant molded article tends to be inferior in hue.

Polycarbonate resin (A)

The polycarbonate resin (A) for use in the present invention is not particularly limited, and various kinds of polycarbonate resins may be used. Polycarbonate resin can be classified into aromatic polycarbonate resin, in which each of the carbons directly bonded to the carbonate bond is an aromatic carbon, and aliphatic polycarbonate resin, in which they are aliphatic carbons. Either of them can be used in the present invention. In terms of heat resistance, mechanical properties, electrical properties, etc., aromatic polycarbonate resin is preferred for use as the polycarbonate resin (A).

Monomers as starting materials for aromatic polycarbonate resin include aromatic dihydroxy compounds. Examples of the aromatic dihydroxy compounds include:

dihydroxybenzenes, such as 1,2-dihydroxybenzene, 1,3-dihydroxybenzene (i.e., resorcinol), and 1,4-dihydroxybenzene;

dihydroxybiphenyls, such as 2,5-dihydroxybiphenyl, 2,2'-dihydroxybiphenyl, and 4,4'-dihydroxybiphenyl;

Dihydroxynaphthalenes, such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;

Dihydroxydiaryl ethers, such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy) benzene, and 1,3-bis(4-hydroxyphenoxy)benzene;

Bis(hydroxyaryl)alkanes, such as 2,2-bis(4-hydroxyphenyl)propane (i.e., bisphenol A), 1,1-bis(4-hydroxyphenyl) propane, 2,2-bis(3-methyl-4-hydroxyphenyl)propane (i.e., bisphenol C), 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane,

2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane;

Bis(hydroxyaryl)cycloalkanes, such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-4-tert-butyl-cyclohexane, 1,1-bis(4-hydroxyphenyl)-3-phenylcyclohexane, and 1,1-bis(4-hydroxyphenyl)-4-phenylcyclohexane;

Cardo structure-containing bisphenols, such as 9,9-bis(4-hydroxyphenyl)fluorene and 9,9-bis(4-hydroxy-3-methylphenyl)fluorene;

Dihydroxydiaryl sulfides, such as 4,4'-dihydroxydiphenyl sulfide and 4,4'-dihydroxy-3,3'-dimethyldiphenyl sulfide;

dihydroxydiaryl sulfoxides, such as 4,4'-dihydroxydiphenyl sulfoxide and 4,4'-dihydroxy-3,3'-dimethyldiphenyl sulfoxide; and

dihydroxydiaryl sulfones, such as 4,4'-dihydroxydiphenyl sulfone and 4,4'-dihydroxy-3,3'-dimethyldiphenyl sulfone.

Among them, bis(hydroxyaryl)alkanes are preferred, and bis(4-hydroxyphenyl)alkanes are more preferred. From the standpoint of impact resistance and heat resistance, 2,2-bis(4-hydroxyphenyl)propane (i.e., bisphenol A) and 2,2-bis(3-methyl-4-hydroxyphenyl)propane (i.e., bisphenol C) are particularly preferred.

These aromatic dihydroxy compounds may be used singly or in any combination of two or more at any ratio.

Monomers as starting materials for polycarbonate resin include carbonate precursors. Examples of the carbonate precursors include carbonyl halide and carbonate ester. The carbonate precursors may be used singly or in any combination of two or more at any ratio.

Specific examples of the carbonyl halide include: phosgene; and haloformates, such as bischloroformates of dihydroxy compounds and monochloroformates of dihydroxy compounds.

Specific examples of the carbonate ester include: diaryl carbonates, such as diphenyl carbonate and ditolyl carbonate; dialkyl carbonates, such as dimethyl carbonate and diethyl carbonate; and carbonates of dihydroxy compounds, such as biscarbonates of dihydroxy compounds, monocarbonates of dihydroxy compounds, and cyclic carbonates.

The production method for the polycarbonate resin (A) is not particularly limited, and any method can be used. Examples thereof include interfacial polymerization, melt transesterification, pyridine method, ring-opening polymerization of a cyclic carbonate compound, and solid-state transesterification of a prepolymer. Among them, interfacial polymerization and melt transesterification are preferred in terms of effectively achieving improved moist heat resistance, and interfacial polymerization is particularly preferred.

A polycarbonate resin having a terminal structure represented by formula (1) below may be used as a part or whole of the polycarbonate resin (A) for use in the present invention.

[C5]

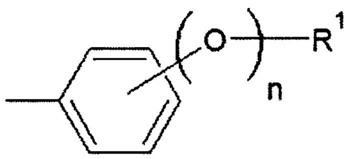

(1)

In formula (1), n is an integer of 0 or 1, and $R^1$ is a $C_{4-14}$ alkyl group. The polycarbonate resin having the terminal structure of formula (1) can achieve high fluidity while maintaining its strength even when it has a desired molecular weight, i.e., without need for molecular weight reduction. Thus, this polycarbonate resin can exhibit high impact resistance even at low temperature.

The alkyl group as $R^1$ preferably has 4 or 6 or more carbon atoms, and preferably 12 or less carbon atoms, more preferably 10 or less carbon atoms. The alkyl group as $R^1$ may be linear or branched.

Above all, $R^1$ is preferably one or more selected from the group consisting of t-butyl group, n-octyl group, iso-octyl group and t-octyl group, and more preferably t-butyl group or t-octyl group. It is preferred that the terminal structure of formula (1) is t-octylphenyl group (i.e., 1,1,3,3-tetramethylbutylphenyl group).

In formula (1), the $-(O)_nR^1$ group bonded to the phenyl group may be at the ortho-, meta- or para-position, and is desirably at the para-position as shown in formula (1') below.

[C6]

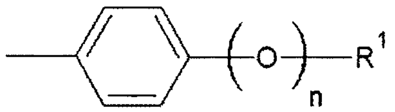

(1')

Preferred specific examples of the $R^1$ group in formula (1) or (1') include: p-t-butyl group; alkylphenyl groups such as p-pentylphenyl group, p-hexylphenyl group, p-heptylphenyl group, p-n-octylphenyl group, p-iso-octylphenyl group, p-t-octylphenyl group, p-dodecylphenyl group, p-tetradecylphenyl group, p-nonylphenol, p-dodecylphenol, amylphenol, hexylphenol, heptylphenol, octylphenol, nonylphenol, decylphenol, dodecylphenol, and myristylphenol; and alkoxyphenyl groups such as p-hexyloxyphenyl group, p-n-octyloxyphenyl group, p-iso-octyloxyphenyl group, p-t-octyloxyphenyl group, and p-dodecyloxyphenyl group.

Among them, the $R^1$ group in formula (1) or (1') is preferably p-t-butyl group, n-octyl group, iso-octyl group or t-octyl group, more preferably p-t-butyl group, p-n-octyl group, p-iso-octyl group or p-t-octyl group. In particular, p-t-octyl group is preferred in terms of achieving high fluidity, which contributes to high impact resistance and low-temperature impact resistance.

The content of the polycarbonate resin having the terminal structure of formula (1), if contained, is preferably 40 mass% or more, and even preferably 100 mass%, relative to 100% by mass of the entire polycarbonate resin (A).

The molecular weight of the polycarbonate resin (A), expressed as the viscosity-average molecular weight (Mv) converted from the solution viscosity measured at a temperature of 25°C using methylene chloride as a solvent, is preferably 10,000 to 50,000, more preferably 10,000 to 40,000, still more preferably 10,000 to 30,000 or 10,000 to 26,000, and preferably 10,500 or more or 11,000 or more, particularly preferably 11,500 or more, and most preferably 12,000 or more, and preferably 24,000 or less, and particularly preferably 20,000 or less. The viscosity-average molecular weight not lower than the lower limit of the above range makes it possible to further enhance the mechanical strength of the polycarbonate resin composition of the present invention. The viscosity-average molecular weight not higher than the upper limit of the above range makes it possible to improve the polycarbonate resin composition of the present invention by suppressing a decrease in fluidity, which leads to increased moldability and contributes to easy molding process.

A mixture of two or more polycarbonate resins having different viscosity-average molecular weights may be used, in which case the mixture may contain a polycarbonate resin having a viscosity-average molecular weight outside the aforementioned preferred range.

The viscosity-average molecular weight [Mv] refers to the value calculated using Schnell's viscosity equation, i.e., $\eta = 1.23 \times 10^{-4} Mv^{0.83}$ wherein [η] is intrinsic viscosity (unit: dl/g) measured at a temperature of 25°C with a Ubbelohde viscometer using methylene chloride as a solvent. The intrinsic viscosity [η] is the value calculated according to the following formula using specific viscosity [$\eta_{sp}$] measured at each solution concentration [C] (g/dl).

[Math. 1]

$$\eta = \lim_{c \to 0} \eta_{sp} / \mathrm{c}$$

For improvement in the appearance of the molded article and in fluidity, the polycarbonate resin (A) may contain a polycarbonate oligomer. The viscosity-average molecular weight [Mv] of the polycarbonate oligomer is usually 1,500 or more, preferably 2,000 or more, and usually 9,500 or less, preferably 9,000 or less. The content of the polycarbonate oligomer is preferably 30 mass% or less of the polycarbonate resin (including the polycarbonate oligomer).

The polycarbonate resin (A) may be produced not only from virgin starting materials but also from polycarbonate resin recycled from post-consumer products (also known as material-recycled polycarbonate resin), and may preferably contain both virgin starting materials and recycled resin or may be composed of recycled polycarbonate resin. The proportion of the recycled polycarbonate resin, if used, in the polycarbonate resin (A) is preferably 5% or more.

Phosphorus stabilizer (C)

The polycarbonate resin composition of the present invention preferably contains a phosphorus stabilizer (C). The phosphorus stabilizer contained in the polycarbonate resin composition of the present invention serves to improve hue and heat discoloration resistance.

Any known phosphorus stabilizer may be used. Specific examples include: phosphorus oxoacids such as

phosphoric acid, phosphonic acid, phosphorus acid, phosphinic acid, and polyphosphoric acid; acid metal pyrophosphates such as sodium acid pyrophosphate, potassium acid pyrophosphate, and calcium acid pyrophosphate; phosphates of Group 1 or Group 2B metals such as potassium phosphate, sodium phosphate, cesium phosphate, and zinc phosphate; phosphate compounds; phosphite compounds; and phosphonite compounds. Above all, compounds having a phosphite structure are particularly preferred. When a phosphite compound is selected, the resultant polycarbonate resin composition can achieve higher discoloration resistance and ensure continuous production.

The phosphite compound here is a trivalent phosphorus compound having a structure represented by the following general formula: $P(OR)_3$, wherein R is a monovalent or bivalent organic group.

Examples of this phosphite compound include triphenyl phosphite, tris(monononylphenyl)phosphite, tris(monononyl/dinonyl phenyl)phosphite, tris(2,4-di-tert-butylphenyl)phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite, distearyl pentaerythritol diphosphite, bis(2,4-di-tert-butyl-4-methylphenyl)pentaerythritol phosphite, bis(2,6-di-tert-butylphenyl)octyl phosphite, 2,2-methylene bis(4,6-di-tert-butylphenyl)octyl phosphite, tetrakis(2,4-di-tert-butylphenyl)-4,4'-biphenylene-diphosphite, and 6-[3-(3-tert-butyl-hydroxy-5-methylphenyl)propoxyl-2,4,8,10-tetra-tert-butyldibenzo[d,f][1,3,2]-dioxaphosphepine.

Among them, aromatic phosphite compounds represented by formulae (1) and (2) below are more preferable in terms of effectively increasing heat discoloration resistance of the polycarbonate resin composition of the present invention.

[C7]

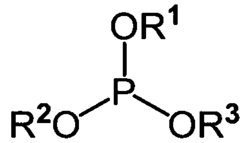

(1)

In formula (1), $R^1$, $R^2$ and $R^3$ may be the same or different and are each a $C_{6-30}$ aryl group.

[C8]

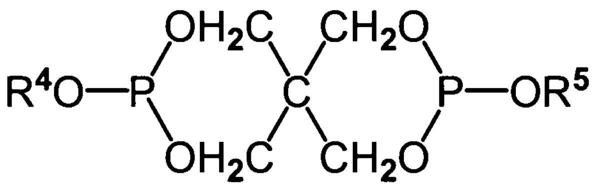

(2)

In formula (2), $R^4$ and $R^5$ may be the same or different and are each a $C_{6-30}$ aryl group.

Among the phosphite compounds represented by formula (1), triphenyl phosphite, tris(monononylphenyl) phosphite, tris(2,4-di-tert-butylphenyl)phosphite and the like are preferred, and tris(2,4-di-tert-butylphenyl)phosphite is more preferred. Specific examples of these organic phosphite compounds include "ADK STAB 1178" manufactured by ADEKA Corporation, "SUMILIZER TNP" manufactured by Sumitomo Chemical Co., Ltd., "JP-351" manufactured by Johoku Chemical Co., Ltd., "ADK STAB 2112" manufactured by ADEKA Corporation, "Irgafos 168" manufactured by BASF, and "JP-650" manufactured by Johoku Chemical Co., Ltd.

Among the phosphite compounds represented by formula (2), those having a pentaerythritol diphosphite structure are particularly preferred, such as bis(2,4-di-tert-butyl-4-methylphenyl)pentaerythritol diphosphite, bis(2,6-di-tert-butyl-4-methylphenyl)pentaerythritol diphosphite, and bis(2,4-dicumylphenyl)pentaerythritol diphosphate. Preferred specific examples of these organic phosphite compounds include "ADK STAB PEP-36" and "ADK STAB PEP-24G" manufactured by ADEKA Corporation and "Doverphos S-9228" manufactured by Dover Chemical Corporation.

Among the phosphite compounds, the aromatic phosphite compounds represented by formula (2) are more preferable in terms of achieving more excellent hue.

These phosphorus stabilizers may be used singly or in any combination of two or more at any ratio.

The content of the phosphorus stabilizer (C) is preferably 0.005 to 0.5 parts by mass, more preferably 0.007 parts by mass or more, still more preferably 0.008 parts by mass or more, particularly preferably 0.01 parts by mass or more, and more preferably 0.4 parts by mass or less, still more preferably 0.3 parts by mass or less, in particular 0.2 parts by mass or less, and especially 0.1 parts by mass or less, relative to 100 parts by mass of the polycarbonate resin (A). If the content of

the phosphorus stabilizer (C) is less than 0.005 parts by mass, the resultant polycarbonate resin composition tends to be insufficient in hue and heat discoloration resistance. If the content of the phosphorus stabilizer (C) is more than 0.5 parts by mass, the heat discoloration resistance is likely to deteriorate rather than improve, and moist heat stability also tends to decrease.

Epoxy compound and/or oxetane compound (D)

The resin composition of the present invention preferably also contains an epoxy compound and/or an oxetane compound (D). The resin composition containing the epoxy compound and/or the oxetane compound (D) can exhibit further improved heat discoloration resistance. The content of the epoxy compound and/or the oxetane compound (D) is preferably 0.0005 to 0.2 parts by mass relative to 100 parts by mass of the polycarbonate resin (A).

The epoxy compound for use in the present invention has one or more epoxy groups in one molecule. Preferred specific examples include: phenyl glycidyl ether, allyl glycidyl ether, t-butylphenyl glycidyl ether, 3,4-epoxycyclohexylmethyl-3',4'-epoxycyclohexylcarboxylate, 3,4-epoxy-6-methylcyclohexylmethyl-3',4'-epoxy-6'-methylcyclohexylcarboxylate, 2,3-epoxycyclohexylmethyl-3',4'-epoxycyclohexylcarboxylate, 4-(3,4-epoxy-5-methylcyclohexyl)butyl-3',4'-epoxycyclohexylcarboxylate, 3,4-epoxycyclohexylethylene oxide, cyclohexylmethyl 3,4-epoxycyclohexylcarboxylate, 3,4-epoxy-6-methylcyclohexylmethyl-6'-methylcyclohexylcarboxylate, bisphenol A diglycidyl ether, tetrabromobisphenol A glycidyl ether, diglycidyl ester of phthalic acid, diglycidyl ester of hexahydrophthalic acid, bis-epoxydicyclopentadienyl ether, bis-epoxyethylene glycol, bis-epoxycyclohexyl adipate, butadiene diepoxide, tetraphenylethylene epoxide, octyl epoxy tallate, epoxidized polybutadiene, 3,4-dimethyl-1,2-epoxycyclohexane, 3,5-dimethyl-1,2-epoxycyclohexane, 3-methyl-5-t-butyl-1,2-epoxycyclohexane, octadecyl-2,2-dimethyl-3,4-epoxycyclohexylcarboxylate, N-butyl-2,2-dimethyl-3,4-epoxycyclohexylcarboxylate, cyclohexyl-2-methyl-3,4-epoxycyclohexylcarboxylate, N-butyl-2-isopropyl-3,4-epoxy-5-methylcyclohexylcarboxylate, octadecyl-3,4-epoxycyclohexylcarboxylate, 2-ethylhexyl-3',4'-epoxycyclohexylcarboxylate, 4,6-dimethyl-2,3-epoxycyclohexyl-3',4'-epoxycyclohexylcarboxylate, 4,5-epoxytetrahydrophthalic anhydride, 3-t-butyl-4,5-epoxytetrahydrophthalic anhydride, diethyl 4,5-epoxy-cis-1,2-cyclohexyldicarboxylate, di-n-butyl-3-t-butyl-4,5-epoxy-cis-1,2-cyclohexyldicarboxylate, epoxidized soy oil, and epoxidized linseed oil.

Among them, alicyclic epoxy compounds are preferred, and 3,4-epoxycyclohexylmethyl-3',4'-epoxycyclohexylcarboxylate is particularly preferred.

Further, polyalkylene glycol derivatives having an epoxy group at one or both ends can also be preferably used, and polyalkylene glycol having an epoxy group at both ends is particularly preferred.

Preferred examples of the polyalkylene glycol derivatives having an epoxy group(s) in their structure include: polyethylene glycol diglycidyl ether, poly(1-methyl)ethylene glycol diglycidyl ether, poly(2-ethyl)ethylene glycol diglycidyl ether, polytetramethylene glycol diglycidyl ether, polyethylene glycol-poly(1-methyl)ethylene glycol diglycidyl ether, polytetramethylene glycol-poly(2-methyl)ethylene glycol diglycidyl ether, and polytetramethylene glycol-poly(1-ethyl)ethylene glycol diglycidyl ether.

These epoxy compounds may be used alone or in combination of two or more.

The content of the epoxy compound is preferably 0.0005 to 0.2 parts by mass, more preferably 0.001 parts by mass or more, still more preferably 0.003 parts by mass or more, particularly preferably 0.005 parts by mass or more, and more preferably 0.15 parts by mass or less, still more preferably 0.1 parts by mass or less, and particularly preferably 0.05 parts by mass or less, relative to 100 parts by mass of the polycarbonate resin (A). If the content of the epoxy resin is less than 0.0005 parts by mass, the resultant polycarbonate resin composition tends to be insufficient in hue and heat discoloration resistance. If the content is more than 0.2 parts by mass, the heat discoloration resistance is likely to deteriorate rather than improve, and the hue and moist heat stability also tend to decrease.

The oxetane compound for use in the present invention may be any compound that has one or more oxetane groups in a molecule, such as a monooxetane compound with one oxetane group in a molecule and a bifunctional or higher functional polyoxetane compound with two or more oxetane groups in a molecule.

The oxetane compound contained serves to further improve good hue and high heat discoloration resistance.

Preferred examples of the monooxetane compound include those represented by general formulae (3), (4) and (5) below.

[C9]

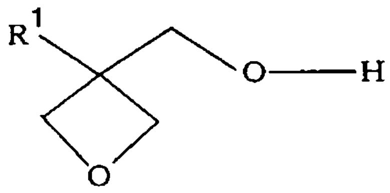

(3)

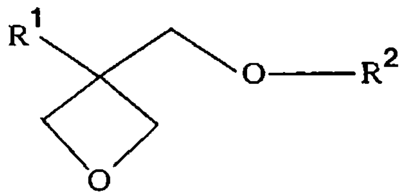

(4)

[C10]

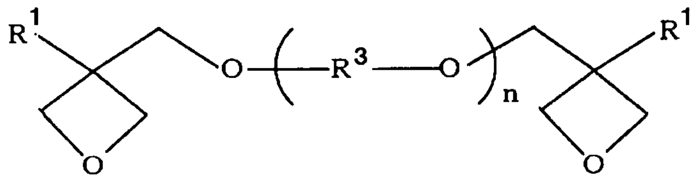

(5)

In formulae (3) to (5), $R^1$ is an alkyl group; $R^2$ is an alkyl group or phenyl group; $R^3$ is a bivalent organic group that may have an aromatic ring; and n is 0 or 1.

In general formulae (3), (4) and (5), $R^1$ is an alkyl group, preferably a $C_{1-6}$ alkyl group, such as methyl group or ethyl group, and particularly preferably ethyl group.

$R^2$ is an alkyl group or phenyl group, preferably a $C_{2-10}$ alkyl group, and may be a chain-like, branched or alicyclic alkyl group or a chain-like or branched alkyl group having an ether bond (oxygen atom in the ether bond) in the middle of the alkyl chain. Specific examples of $R^2$ include ethyl group, propyl group, butyl group, pentyl group, hexyl group, heptyl group, octyl group, 2-ethylhexyl group, nonyl group, decyl group, 3-oxypentyl group, cyclohexyl group, and phenyl group. Among them, $R^2$ is preferably 2-ethylhexyl group, phenyl group, or cyclohexyl group.

Preferred specific examples of the compound of general formula (3) include 3-hydroxymethyl-3-methyloxetane, 3-hydroxymethyl-3-ethyloxetane, 3-hydroxymethyl-3-propyloxetane, 3-hydroxymethyl-3-normal butyl oxetane, and 3-hydroxymethyl-3-propyloxetane. Among them, 3-hydroxymethyl-3-methyloxetane, 3-hydroxymethyl-3-ethyloxetane and the like are particularly preferred.

Particularly preferred specific examples of the compound of general formula (4) include 3-ethyl-3-(2-ethylhexyloxymethyl) oxetane.

In general formula (5), $R^3$ is a bivalent organic group that may have an aromatic ring. Examples thereof include: $C_{1-12}$ linear or branched alkylene groups such as ethylene group, propylene group, butylene group, neopentylene group, n-pentamethylene group, and n-hexamethylene group; phenylene group; divalent groups represented by the following formulae: $-CH^2-Ph-CH^2-$ and $-CH^2-Ph-Ph-CH^2-$ (where Ph is phenyl group); hydrogenated bisphenol A residue; hydrogenated bisphenol F residue; hydrogenated bisphenol Z residue; cyclohexanedimethanol residue; and tricyclodecanedimethanol residue.

Particularly preferred specific examples of the compound of general formula (5) include bis(3-methyl-3-oxetanylmethyl)ether, bis(3-ethyl-3-oxetanylmethyl)ether, bis(3-propyl-3-oxetanylmethyl)ether, bis(3-butyl-3-oxetanylmethyl) ether, 1,4-bis[(3-ethyl-3-oxetanylmethoxy)methyl]benzene, 3-ethyl-3{[(3-ethyloxetane-3-yl)methoxy]methyl}oxetane, 4,4'-bis[(3-ethyl-3-oxetanyl) methoxymethyl]biphenyl, and 1,4-bis[(3-ethyl-3-oxetanyl)methoxymethyl]benzene.

These oxetane compounds may be used alone or in combination of two or more.

The content of the oxetane compound, if contained, is preferably 0.0005 to 0.2 parts by mass, more preferably 0.001 parts by mass or more, still more preferably 0.003 parts by mass or more, particularly preferably 0.005 parts by mass or more, and more preferably 0.15 parts by mass or less, still more preferably 0.1 parts by mass or less, and particularly preferably 0.05 parts by mass or less, relative to 100 parts by mass of the polycarbonate resin (A). If the content of the oxetane compound is less than 0.0005 parts by mass, the resultant polycarbonate resin composition tends to be

insufficient in hue and heat discoloration resistance. If the content is more than 0.2 parts by mass, the heat discoloration resistance is likely to deteriorate rather than improve, and gas production tends to occur during molding.

It is also preferable that the resin composition contains both the epoxy compound and the oxetane compound, in which case the total content of these compounds is preferably 0.0005 to 0.2 parts by mass relative to 100 parts by mass of the polycarbonate resin (A).

Fatty acid ester (E)

The resin composition of the present invention preferably contains a fatty acid ester (E). The fatty acid ester (E) contained serves to improve hue.

The fatty acid ester (E) is an ester of aliphatic carboxylic acid and alcohol.

In the aliphatic carboxylic acid-alcohol ester, the aliphatic carboxylic acid may be, for example, a saturated or unsaturated monovalent, divalent or trivalent aliphatic carboxylic acid. The aliphatic carboxylic acid as used herein encompasses alicyclic carboxylic acids. Above all, the aliphatic carboxylic acid is preferably a $C_{6-36}$ monovalent or divalent carboxylic acid, more preferably a $C_{6-36}$ saturated monovalent aliphatic carboxylic acid. Specific examples of these aliphatic carboxylic acids include palmitic acid, stearic acid, caproic acid, capric acid, lauric acid, arachic acid, behenic acid, lignoceric acid, cerotinic acid, melissic acid, tetratriacontanoic acid, montanic acid, adipic acid, and azelaic acid.

In the aliphatic carboxylic acid-alcohol ester, the alcohol may be, for example, a saturated or unsaturated monohydric or polyhydric alcohol. This alcohol may have a substituent such as a fluorine atom or an aryl group. Above all, the alcohol is preferably a saturated monohydric or polyhydric alcohol having not more than 30 carbons, more preferably a saturated monohydric or polyhydric aliphatic alcohol having not more than 30 carbons. The term aliphatic as used herein encompasses alicyclic compounds.

Specific examples of these alcohols include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

The ester may contain the aliphatic carboxylic acid and/or the alcohol as impurities. In addition, the ester may be a single compound or a mixture of a plurality of compounds. These aliphatic carboxylic acids and alcohols, which are bonded together to form the ester, may each be used singly or in any combination of two or more at any ratio.

Specific examples of the aliphatic carboxylic acid-alcohol ester include beeswax (a mixture composed mainly of melissyl palmitate), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate.

The content of the fatty acid ester (E) is preferably 0.01 to 0.5 parts by mass relative to 100 parts by mass of the polycarbonate resin (A).

Additives, etc.

The polycarbonate resin composition of the present invention can contain additives other than those described above, such as antioxidants, ultraviolet absorbers, fluorescent brighteners, pigments, dyes, polymers other than the polycarbonate resin, flame retardants, impact resistance enhancers, antistats, plasticizers, and compatibilizers. These additives may be used singly or in combination of two or more.

The content of polymers other than the polycarbonate resin (A), if contained, is preferably 20 parts by mass or less, more preferably 10 parts by mass or less, still more preferably 5 parts by mass or less, and particularly preferably 3 parts by mass or less, relative to 100 parts by mass of the polycarbonate resin (A).

Production method for polycarbonate resin composition

The production method for the polycarbonate resin composition of the present invention is not particularly limited, and known methods can be used widely. For example, the above-described essential components and the other components to be blended as appropriate are premixed together using various mixers, such as a tumbler and a Henschel mixer, and then melt-kneaded using a mixer, such as a Banbury mixer, a roll mixer, a Brabender mixer, a single-screw extruder, a twin-screw extruder, or a kneader. The melt-kneading temperature is not particularly limited and is usually in a range of from 240°C to 320°C.

Polycarbonate resin composition

The polycarbonate resin composition of the present invention has excellent hue and, thus, is excellent in YI (yellowness index) with an initial YI value of preferably 23 or less, more preferably 22 or less, 21.5 or less or 21 or less, and still more preferably 20.5 or less, at an optical path length of 300 mm.

The initial YI value is the YI value measured at an optical path length of 300 mm using illuminant C and a 2°

observer for a long-optical-path product (300 mm × 7 mm × 4 mm) molded at a resin temperature of 340°C and a mold temperature of 80°C.

Optical part

The polycarbonate resin composition of the present invention is pelletized into pellets, so that they can be molded into an optical part by various molding methods. Alternatively, the polycarbonate resin composition melt-kneaded in an extruder can be directly, i.e., without being formed into pellets, molded into an optical part.
The polycarbonate resin composition of the present invention is excellent in fluidity and hue and causes extremely less gas production and mold contamination during molding. Thus, it is suitable for injection molding into an optical part, especially into a thin optical part that tends to involve mold contamination. The resin temperature during injection molding, especially into a thin molded article, is preferably higher than the temperature range of 260°C to 300°C at which injection molding of polycarbonate resin is usually performed. More specifically, the resin temperature is preferably 305°C to 400°C, more preferably 310°C or higher, still more preferably 315°C or higher, particularly preferably 320°C or higher, and more preferably 390°C or lower. When a conventional polycarbonate resin composition is molded at an increased resin temperature to form a thin molded article, the resultant molded article tends to yellow. However, the resin composition of the present invention makes it possible to produce a molded article, in particular a thin optical part, with good hue and high transparency, even when molded at the above-described temperature range.
If direct measurement of the resin temperature is difficult, the setting temperature of a barrel may be taken as the resin temperature.
The thin molded article as used herein refers to a molded article with a plate-like portion that usually has a thickness of 1 mm or less, preferably 0.8 mm or less, more preferably 0.6 mm or less. The plate-like portion may be flat or bent, with a surface that may be flat, uneven or the like and a cross-section that may be inclined, wedge-shaped or the like.
The optical part may be in the form of a film or sheet. Specific examples thereof include a light guide film.
In addition, the optical part may be suitably a light guide, a lens or the like that is designed to guide light from a light source, such as an LED, in head lamps, rear lamps, fog lamps, etc. for vehicles such as automobiles and motorcycles.
In particular, the optical part may be a part for devices and appliances that directly or indirectly use a light source such as an LED, an organic LED, an incandescent lamp, a fluorescent lamp, or a cathode tube. Typical examples thereof include a light guide plate and members for surface light emitters.
Light guide plates are designed to guide light from a light source, such as an LED, in liquid crystal backlight units or various devices such as display devices and lighting devices. Light that enters a light guide plate from the side, back or the like is diffused by a raised and recessed pattern usually formed on the front, so that it exits uniformly. The light guide plate usually has a flat plate shape and may or may not have the raised and recessed pattern on the front.
The light guide plate is usually and preferably molded by injection molding, ultra-high-speed injection molding, injection compression molding, melt extrusion molding (e.g., T-die molding) or the like.
The light guide plate obtained by molding the resin composition of the present invention is not opaque, is free from decrease in transmittance, and has good hue and high transparency with few molding defects due to mold contamination.
The light guide plate using the polycarbonate resin composition of the present invention can be suitably used in the fields of liquid crystal backlight units and various devices such as display devices and lighting devices. Examples of these devices include various mobile terminals such as mobile phone, mobile notebook, netbook, slate PC, tablet PC, smartphone and tablet terminal, cameras, clocks, laptop computers, various displays, and lighting equipment. In particular, the polycarbonate resin composition of the present invention can be suitably used to form a high-performance edge-lit light guide plate, etc. for use in these devices.

[Examples]

Hereinafter, the present invention will be described more specifically by way of Examples. However, the present invention is not limited to the Examples below.
Raw materials used in the Examples and Comparative Examples are shown in Table 1.

[Table 1]

| Component | Code | |
|---|---|---|
| Polycarbonate resin (A) | A1 | Aromatic polycarbonate resin with p-t-butylphenyl group as terminal structure, produced by interfacial polymerization using bisphenol A as starting material;<br>Trade name: "H-4000F" from Mitsubishi Engineering-Plastics Corp. Mv: 16,000 |
| | A2 | Aromatic polycarbonate resin with p-t-butylphenyl group as terminal structure, produced by interfacial polymerization using bisphenol A as starting material;<br>Trade name: "H-7000F" from Mitsubishi Engineering-Plastics Corp. Mv: 14,000 |
| | A3 | Aromatic polycarbonate resin with p-t-octylphenyl group as terminal structure, produced by interfacial polymerization using bisphenol A as starting material;<br>Trade name: "T-3700" from Mitsubishi Gas Chemical Co., Inc. Mv: 17,500 |
| | A4 | Recycled aromatic polycarbonate resin, recovered from market<br>Trade name: "PC-50S" from Ningbo Xuri Hongyu Technology Co., Ltd. Mv: 16,000 |
| Polylactone-polyether copolymer (B) | B1 | ε-caprolactone modified polytetramethylene glycol represented by formula below:<br>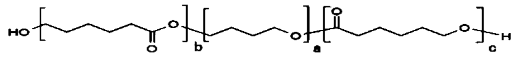<br>Trade name: "Capa 7201A" from Ingevity; Mn: 2,000; Molar ratio of a/(b+c): 73.4/26.6; Herein, a = 18, (b+c) = 6 |
| | B2 | ε-caprolactone polypropylene glyceryl ether represented by formula below:<br>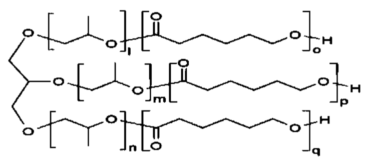<br>Trade name: "PLACCEL P3403" from Daicel Corp.; Mn: 4,000; Molar ratio of (l+m+n)/(o+p+q): 75.4/24.6; Herein, (l+m+n) = 42, (p+q+r) = 14 |
| Other polyether compound (BX) | BX1 | Polytetramethylene glycol represented by HO-$(CH_2CH_2CH_2CH_2O)_m$-H<br>Trade name: "PTMG1300" from Mitsubishi Chemical Corp.; Mn: 1,300 |
| | BX2 | Polytetramethylene glycol represented by HO-$(CH_2CH_2CH_2CH_2O)_m$-H<br>Trade name: "PTMG2000" from Mitsubishi Chemical Corp.; Mn: 2,000 |
| | BX3 | Polytetramethylene glycol-polypropylene glygol copolymer represented by HO-$(CH_2CH_2CH_2CH_2O)_m$-/-$(CH_2CH(CH_3)O)_n$-H; "POLYCERIN DCB-2000" from NOF Corp.<br>Number-average molecular weight: 2,000; Molar ratio of m/n: 61.7/38.3 |
| | BX4 | Polypropylene glycol represented by HO-$CH_2CH(CH_3)O)_n$-H<br>Trade name: "UNIOL D-2000" from NOF Corp.; Mn: 2,000 |
| | BX5 | Polypropylene glycol represented by HO-$CH_2CHCH_3O)_n$-H<br>Trade name: "UNIOL D-4000" from NOF Corp.; Mn: 4,000 |
| Phosphorus stabilizer (C) | C1 | Tris(2,4-di-tert-butylphenyl)phosphite<br>Trade name: "ADK STAB 2112" from ADEKA Corp. |
| | C2 | Bis(2,6-di-tert-butyl-4-methylphenyl)pentaerythritol diphosphite<br>Trade name: "ADK STAB PEP-36" from ADEKA Corp. |
| | C3 | Bis(2,4-dicumylphenyl)pentaerythritol diphosphite<br>Trade name: "Doverphos S-9228PC" from Dover Chemical Corp. |
| Epoxy or oxetane compound (D) | D1 | 3,4-epoxycyclohexylmethyl-3',4'-epoxycyclohexanecarboxylate<br>Trade name: "CELLOXIDE 2021P" from Daicel Corp. |
| | D2 | 3-ethyl-3{[(3-ethyloxetane-3-yl)methoxy]methyl}oxetane<br>Trade name: "ARON OXETANE OXT-221" from Toagosei Co., Ltd. |

(continued)

| Component | Code | |
|---|---|---|
| Mold release agent (E) | E1 | Glycerol monostearate<br>Trade name: "RIKEMAL S-100A" from Riken Vitamin Co., Ltd. |

Examples 1 to 15 and Comparative Examples 1 to 7

Production of resin composition pellets

The above-described components were used in the proportions (parts by mass) shown in Tables 2 and 3 below and mixed together in a tumbler for 20 minutes, followed by melt-kneading with a vented single-screw extruder with a screw diameter of 40 mm ("VS-40" manufactured by Tanabe Plastics Machinery Co., Ltd.) at a cylinder temperature of 240°C, and the resultant strand was cut into pellets.

Transparency of strand during production of resin composition pellets

During the production process of the resin composition pellets, the transparency of the strand melt-kneaded and extruded from the extruder was visually judged based on the following criteria:

A: The extruded strand had extremely high transparency, with extremely good compatibility between the polycarbonate resin (A) and the polylactone-polyether copolymer (B);
B: The extruded strand had high transparency, with good compatibility between the polycarbonate resin (A) and the polylactone-polyether copolymer (B);
C: The extruded strand was slightly opaque, with poor compatibility between the polycarbonate resin (A) and the polylactone-polyether copolymer (B);
D: The extruded strand was strongly opaque, with extremely poor compatibility between the polycarbonate resin (A) and the polylactone-polyether copolymer (B).

Gas production during molding (evaluation of mold contamination)

Evaluation of (mold) contamination during injection molding

The pellets obtained as described above were dried at 120°C for five hours, followed by 200-shot injection molding with an injection molding machine ("SE7M" manufactured by Sumitomo Heavy Industries, Ltd.) by using a tear drop-shaped mold as shown in Figure 1 under the following conditions: a cylinder temperature of 340°C, a molding cycle of 10 seconds, and a molding temperature of 40°C. After the completion of the injection molding, contamination by white contaminants adhering to the metal mirror surface of the fixed side mold was visually judged based on the following criteria:

A: Very few contaminants were found on the mold, which proved extremely good mold contamination resistance;
B: A few contaminants were found on the mold, which proved some mold contamination resistance;
C: Relatively many contaminants were found on the mold, which led to mold contamination;
D: Many contaminants were found on the mold, which led to significant mold contamination.

The tear drop-shaped mold shown in Figure 1 is designed to receive the resin composition from a gate G and to allow produced gas to be accumulated in a pointed portion P. The gate G is 1 mm wide and 1 mm thick. In Figure 1, the mold has a width h1 of 14.5 mm, a length h2 of 7 mm, and a length h3 of 27 mm. A molding portion is 3 mm thick.

Hue (YI)

The pellets obtained were dried at 120°C for five to seven hours with a circulating hot air dryer and molded into a long-optical-path product (300 mm × 7 mm × 4 mm) at a resin temperature of 340°C and a mold temperature of 80°C by using an injection molding machine ("HSP100A" manufactured by Sodick Co., Ltd.)
The long-optical-path molded product was measured for its YI (yellowness index) at an optical path length of 300 mm. The measurement was conducted using a long pathlength transmission spectrophotometer ("ASA 1" manufactured by Nippon Denshoku Industries Co., Ltd.; illuminant C; 2° observer).
The evaluation results are shown in Tables 2 and 3 below.

[Table 2]

| | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| PC resin (A) | A1 | 100 | 100 | 100 | 100 | 100 | 100 | 100 | 100 | 100 | 100 | 100 | 100 | | | 90 |
| | A2 | | | | | | | | | | | | | 100 | | |
| | A3 | | | | | | | | | | | | | | 100 | |
| | A4 | | | | | | | | | | | | | | | 10 |
| Polylactone-polyether copolymer (B) | B1 | 0.5 | 1.1 | | 1.1 | 1.1 | 1.1 | 1.1 | 1.1 | 1.1 | 1.1 | 1.1 | 1.1 | 1.1 | 1.1 | 1.1 |
| | B2 | | | 0.8 | | | | | | | | | | | | |
| Copolymer other than (B) | BX1 | | | | | | | | | | | | | | | |
| | BX2 | | | | | | | | | | | | | | | |
| | BX3 | | | | | | | | | | | | | | | |
| | BX4 | | | | | | | | | | | | | | | |
| | BX5 | | | | | | | | | | | | | | | |
| Phosphorus stabilizer | C1 | 0.05 | 0.05 | 0.05 | | 0.05 | | 0.05 | 0.05 | 0.05 | | | | 0.05 | 0.05 | 0.05 |
| | C2 | | | | 0.05 | 0.05 | | | | | 0.05 | 0.05 | 0.05 | | | |
| | C3 | | | | | | 0.05 | | | | | | | | | |
| Epoxy or oxetane | D1 | | | | | | | 0.03 | | | 0.03 | | | | | |
| | D2 | | | | | | | | 0.03 | | | 0.03 | | | | |
| Fatty acid ester | E1 | | | | | | | | | 0.03 | | | 0.03 | | | |
| Transpareny of strand | | A | A | A | A | A | A | A | A | A | A | A | A | A | A | A |
| Gas production during molding (evaluation of mold contamination) | | A | A | A | A | A | A | A | A | A | A | A | A | A | A | A |
| YI (300 mm) | | 18.1 | 15.6 | 20.5 | 14.9 | 14.5 | 15.1 | 15.3 | 15.9 | 14.7 | 14.6 | 15.2 | 14.0 | 14.9 | 19.6 | 19.4 |

[Table 3]

| | | Comparative Example | | | | | | |
|---|---|---|---|---|---|---|---|---|
| | | 1 | 2 | 3 | 4 | 5 | 6 | 7 |
| PC resin (A) | A1 | 100 | 100 | 100 | 100 | 100 | 100 | 90 |
| | A2 | | | | | | | |
| | A3 | | | | | | | |
| | A4 | | | | | | | 10 |
| Polylactone-polyether copolymer (B) | B1 | | | | | | | |
| | B2 | | | | | | | |
| Copolymer other than (B) | BX1 | 0.001 | 1.1 | | | | | 0.001 |
| | BX2 | | | 1.1 | | | | |
| | BX3 | | | | 1.1 | | | |
| | BX4 | | | | | 0.8 | | |
| | BX5 | | | | | | 0.8 | |
| Phosphorus stabilizer | C1 | 0.05 | 0.05 | 0.05 | 0.05 | 0.05 | 0.05 | 0.05 |
| | C2 | | | | | | | |
| | C3 | | | | | | | |
| Epoxy or oxetane | D1 | | | | | | | |
| | D2 | | | | | | | |
| Fatty acid ester | E1 | | | | | | | |
| Transpareny of strand | | A | A | D | A | A | D | A |
| Gas production during molding (evaluation of mold contamination) | | A | D | D | C | D | C | A |
| YI (300 mm) | | 30.9 | 16.5 | 27.7 | 15.8 | 21.3 | 28.5 | 31.9 |

[Industrial Applicability]

The polycarbonate resin composition of the present invention has good hue and excellent transparency, causes extremely less gas production and mold contamination during molding, and has excellent impact resistance. Thus, this polycarbonate resin composition is extremely suitable for various molded articles, especially optical parts.

## Claims

1. A polycarbonate resin composition, comprising a polycarbonate resin (A) and, relative to 100 parts by mass of the polycarbonate resin (A), 0.01 to 4 parts by mass of a polylactone-polyether copolymer (B).

2. The polycarbonate resin composition of claim 1, wherein the polylactone-polyether copolymer (B) comprises a polylactone unit and a polyether unit at a molar ratio of 5:95 to 95:5.

3. The polycarbonate resin composition of claim 1 or 2, wherein the polylactone-polyether copolymer (B) is a polycaprolactone-polyether copolymer.

4. The polycarbonate resin composition of claim 3, wherein the polycaprolactone-polyether copolymer (B) is a polycaprolactone-polyether copolymer represented by general formula (I) or (II) below:

[C1]

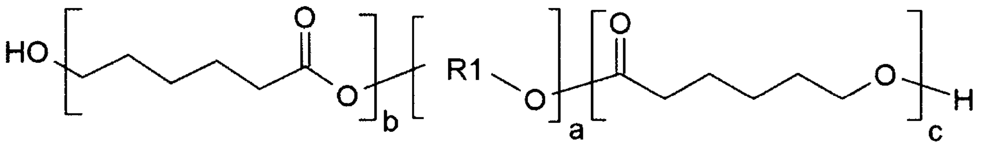

(I)

[C2]

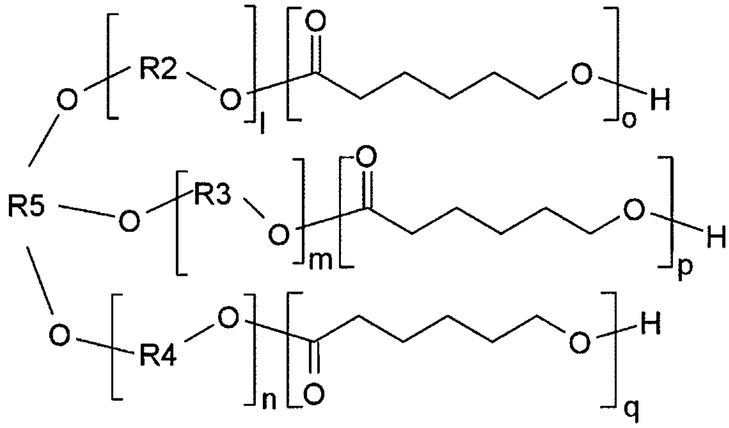

(II)

wherein R1 to R4 are each a linear or branched $C_{2-20}$ hydrocarbon group that may be substituted by an aryloxy or alkoxy group; R5 is $CH_2CHCH_2$, $CH_3C(CH_2)_3$ or $CH_3CH_2C(CH_2)_3$; a is an integer of 3 or more; b and c are each an integer of 1 or more; l, m and n are each an integer of 1 or more; and o, p and q are each an integer of 1 or more.

**5.** The polycarbonate resin composition of claim 4, wherein R1 to R4 in the general formula (I) or (II) are alkylene groups selected from the group consisting of 1,2-ethylene group, 1,2-propylene group, trimethylene group, 1,2-butylene group, and tetramethylene group.

**6.** The polycarbonate resin composition of claim 1 or 2, wherein the polylactone-polyether copolymer (B) has a number-average molecular weight (Mn) of 200 to 10,000.

**7.** The polycarbonate resin composition of claim 1 or 2, wherein the polycarbonate resin (A) has a viscosity-average molecular weight (Mv) of 10,000 to 50,000.

**8.** The polycarbonate resin composition of claim 1 or 2, further comprising 0.005 to 0.5 parts by mass of a phosphorus stabilizer (C) relative to 100 parts by mass of the polycarbonate resin (A).

**9.** The polycarbonate resin composition of claim 8, wherein the phosphorus stabilizer (C) comprises a phosphorus compound having a phosphite structure.

**10.** The polycarbonate resin composition of claim 9, wherein the phosphorus stabilizer (C) comprises two or more phosphorus compounds having a phosphite structure, at least one of which is a phosphite stabilizer having a spiro ring skeleton.

**11.** The polycarbonate resin composition of claim 1 or 2, further comprising 0.0005 to 0.2 parts by mass of an epoxy compound and/or an oxetane compound (D) relative to 100 parts by mass of the polycarbonate resin (A).

**12.** The polycarbonate resin composition of claim 1 or 2, further comprising 0.01 to 0.5 parts by mass of a fatty acid ester (E) relative to 100 parts by mass of the polycarbonate resin (A).

**13.** A pellet, comprising the polycarbonate resin composition of claim 1 or 2.

**14.** A molded article, which is obtained by molding the pellet of claim 13.

**15.** The molded article of claim 14, which is an optical part.

[FIG.1]

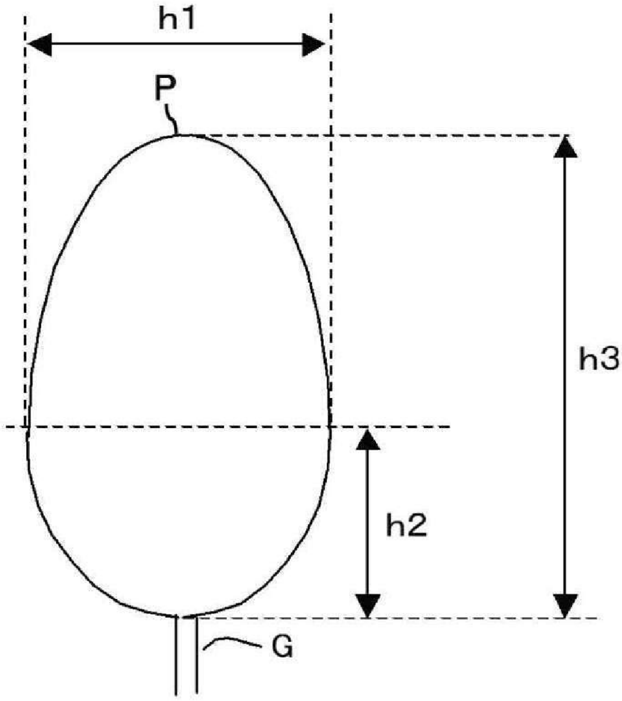

**INTERNATIONAL SEARCH REPORT**

International application No.
**PCT/JP2024/022350**

**A. CLASSIFICATION OF SUBJECT MATTER**

***C08L 69/00***(2006.01)i; ***C08G 81/00***(2006.01)i; ***C08K 5/101***(2006.01)i; ***C08K 5/524***(2006.01)i; ***C08L 73/00***(2006.01)i
FI: C08L69/00; C08K5/524; C08K5/101; C08G81/00; C08L73/00

According to International Patent Classification (IPC) or to both national classification and IPC

**B. FIELDS SEARCHED**

Minimum documentation searched (classification system followed by classification symbols)

C08L69/00; C08G81/00; C08K5/101; C08K5/524; C08L73/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/199783 A1 (IDEMITSU KOSAN CO., LTD.) 15 December 2016 (2016-12-15) claims, paragraphs [0050], [0061]-[0066] | 1-15 |
| A | WO 2022/034898 A1 (MITSUBISHI GAS CHEMICAL COMPANY, INC.) 17 February 2022 (2022-02-17) entire text | 1-15 |
| A | JP 2022-154124 A (TEIJIN LIMITED) 13 October 2022 (2022-10-13) entire text | 1-15 |
| A | JP 2021-059681 A (MITSUI CHEMICALS INC.) 15 April 2021 (2021-04-15) entire text | 1-15 |
| A | JP 2020-097709 A (SUMIKA POLYCARBONATE LTD.) 25 June 2020 (2020-06-25) entire text | 1-15 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/022350**

| Patent document cited in search report | Publication date (day/month/year) | Patent family member(s) | Publication date (day/month/year) |
|---|---|---|---|
| WO 2016/199783 A1 | 15 December 2016 | CN 107636075 A | |
| WO 2022/034898 A1 | 17 February 2022 | US 2023/0295373 A1<br>entire text<br>EP 4198092 A1<br>CN 116096779 A | |
| JP 2022-154124 A | 13 October 2022 | US 2023/0159748 A1<br>entire text<br>CN 115605542 A | |
| JP 2021-059681 A | 15 April 2021 | (Family: none) | |
| JP 2020-097709 A | 25 June 2020 | CN 111334020 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5699188 B